# EUROPEAN PATENT SPECIFICATION

(11) **EP 4 390 348 B1**
(45) Date of publication and mention of the grant of the patent: **25.02.2026**
(21) Application number: 22857689.8
(22) Date of filing: 12.08.2022
(51) Int. Cl.: G01K 7/22, G01K 7/18, G01K 1/16, G01K 1/00, H02J 7/00, G01K 1/143, G01K 1/14, B60L 53/16

(54) **TEMPERATURE MEASUREMENT STRUCTURE, CHARGING APPARATUS AND MOTOR VEHICLE**
TEMPERATURMESSSTRUKTUR, LADEVORRICHTUNG UND KRAFTFAHRZEUG
STRUCTURE DE MESURE DE TEMPÉRATURE, APPAREIL DE CHARGE ET VÉHICULE À MOTEUR

(30) Priority: 16.08.2021 CN 202110939761
(43) Date of publication of application: 26.06.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2022/112063
(87) International publication number: WO 2023/020377

(56) References cited:
- CN-A- 103 994 833
- CN-A- 112 331 946
- CN-A- 113 588 114
- CN-U- 208 171 458
- CN-U- 212 228 255
- CN-U- 215 811 321
- DE-A1- 102019 211 809
- JP-A- 2001 185 239

## Description

### RELATED APPLICATION

The present application claims priority to Chinese Patent Application No. 202110939761.3, filed on August 16 and 2021, and entitled "Temperature Measurement Structure, Charging Apparatus and Motor Vehicle".

### TECHNICAL FIELD

The present disclosure relates to the field of temperature detection structures, in particular relates to a temperature measurement structure, also relates to a charging apparatus, and further relates to a motor vehicle.

### BACKGROUND

Temperature is one of the most basic physical quantities in science and technology. The disciplines such as physics, chemistry and thermodynamics are inseparable from temperature. The temperature is one of the most common and important parameters in industrial production.

There are many ways to measure temperature, which may be divided into two categories: contact temperature measurement and non-contact temperature measurement, if based only on whether or not the measurement body is in contact with the measured medium. Contact temperature measurement is based on the principle of thermal equilibrium, in which case the temperature measurement sensitive element must be in contact with the measured medium, and both of which are in the same thermal equilibrium state and have the same temperature. For example, the mercurial thermometer and the thermocouple thermometer measure temperature using this method. Non-contact temperature measurement is based on the principle of thermal radiation of materials. The temperature measurement element does not need to contact the measured medium, but determines the temperature by receiving the radiant heat emitted by the measured object. Examples include the radiation thermometer, the fiber-optic thermometers, etc.

Contact temperature measurement is simple and reliable, and has high measurement accuracy. However, the temperature measurement element must be in contact with the measured medium before measuring the temperature. When the measured medium is inaccessible or has serious hidden dangers after contact, contact temperature measurement cannot be chosen. For non-contact temperature measurement, since the temperature measurement element does not need to contact the measured medium, the range of temperature measurement is very broad, and in principle the upper limit of temperature measurement is unrestricted. However, non-contact temperature measurement is affected by the emissivity of the measured object, the distance between the measured object and the measurement element, and other media such as smoke dust and water vapor, so has a large temperature measurement error. Moreover, since heat is transferred by the thermal radiation, the reflection time is long and the temperature measurement speed is low, which cannot be suitable for many applications where the temperature measurement timeliness ratio and accuracy rate are required.

For example, when a high-power charging device is charging, the temperature of the measured object will increase rapidly, so it is necessary to monitor the temperature of the charging device in real time to ensure safety of the charging device and reduce the risk caused by the uncontrollability of temperature during the charging process. However, in general the measured object of the charging device carries a large current, which may cause an electric shock damage to the contact-type measurement element, but if non-contact temperature measurement is employed, real-time temperature cannot be obtained in time. A temperature measurement structure is known from the prior art, for example from DE102019211809A1. A temperature sensor heat conduction subassembly and connector are known from the prior art, for example from CN208171458U.

Therefore, the field of temperature measurement structures is in urgent need of a temperature measurement structure that can rapidly reflect the real-time temperature of the measured object without causing a damage to the temperature measurement element.

### SUMMARY

The present invention is defined by the independent claims. Further embodiments are set forth in the dependent claims. Any references to inventions or embodiments not falling within the scope of the independent claims are to be interpreted as examples useful for understanding the invention. In order to monitor the temperature of a measured object, the present disclosure provides a temperature measurement structure, a charging apparatus and a motor vehicle. The temperature of the measured object is indirectly conducted to a temperature sensor through a heat conduction medium, so that not only the temperature of the measured object is monitored, but also a destructive influence on the temperature sensor is avoided.

The technical solutions provided in the present disclosure to solve the technical problem are as follows.

A temperature measurement structure, including a heat conduction medium, a temperature sensor and a pressure supply mechanism, and the heat conduction medium is mounted on the pressure supply mechanism, the pressure supply mechanism supplies pressure to make the heat conduction medium in contact with a measured object and the temperature sensor respectively, and the temperature sensor determines a temperature of the measured object through a temperature of the heat conduction medium.

A charging apparatus, including the measured object and the temperature measurement structure described above, and the charging apparatus is a charging plug or a charging socket.

A motor vehicle, including the temperature measurement structure described above.

Advantageous effects of the present disclosure include:
1. Compared with contact measurement (i.e., the terminal directly contacts the temperature sensor), the use of a conductive temperature measurement apparatus (i.e., indirect contact) can not only realize rapid reflection of the real-time temperature of the measured object, but also avoid a damage to the temperature sensor.
2. Compared with non-contact (air) measurement with a monitoring accuracy of ±8K, the temperature measurement structure improves the temperature monitoring accuracy, which may reach ±3K.
3. The temperature measurement structure and the charging apparatus of the present disclosure do not have complicated operating mechanisms, and do not have power sources and transmission structures. They rely on the assembly process of the charging apparatus itself to realize working and separation of the heat conduction medium. The structure is simple, does not require maintenance and rarely fails, and is safe and reliable.

### BRIEF DESCRIPTION OF THE DRAWINGS

The accompanying drawings constituting a part of the present disclosure are used to provide further understandings of the present disclosure. The illustrative embodiments of the present disclosure and explanations therefor are used to explain the present disclosure and do not constitute improper limitations on the present disclosure.
FIG. 1 is a schematic diagram of a conductive temperature measurement structure according to the embodiment 1 of the present disclosure in which the heat conduction medium is in an initial position;
FIG. 2 is a schematic diagram of a conductive temperature measurement structure according to the embodiment 1 of the present disclosure in which the heat conduction medium is in a working position;
FIG. 3 is a schematic diagram of the A-A cross section of FIG. 2 according to embodiment 1;
FIG. 4 is a schematic diagram of the heat conduction medium according to embodiment 1;
FIG. 5 is a schematic diagram of a heat conduction medium according to embodiment 2;
FIG. 6 is a schematic diagram of a heat conduction medium according to embodiment 3;
FIG. 7 is a schematic diagram of the heat conduction medium according to embodiment 3;
FIG. 8 is a schematic diagram of a heat conduction medium according to embodiment 4;
FIG. 9 is a schematic diagram of the heat conduction medium according to embodiment 4;
FIG. 10 is a schematic diagram of a heat conduction medium according to embodiment 5;
FIG. 11 is a schematic diagram of a heat conduction medium according to embodiment 6, not forming part of the claimed invention.
   1. support side wall; 2. temperature sensor; 3. PCBA; 4. heat conduction medium; 5. positioning member; 6. measured object; 7. data line;
   11. accommodating cavity; 12. mounting opening; 13. support table; 14. articulated hole; 131. upper contact surface;
   41. contact part; 42. connection part; 43. sensor contact part; 44. upper inclined surface; 45. second return device; 46. articulated part;
   51. lower inclined surface; 52. guide rail; 53. first return device.

### DESCRIPTION OF EMBODIMENTS

It should be noted that, as long as there is no conflict, the embodiments and the features in the embodiments of the present disclosure can be combined with each other. The present disclosure will be described in detail below with reference to the accompanying drawings and the embodiments.

### Embodiment 1

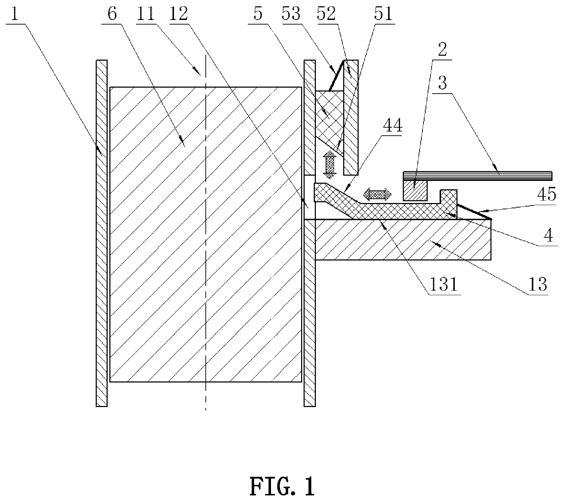

A temperature measurement structure, including a heat conduction medium 4, a temperature sensor 2 and a pressure supply mechanism, and the heat conduction medium 4 is mounted on the pressure supply mechanism, the pressure supply mechanism supplies pressure to make the heat conduction medium 4 in contact with a measured object 6 and the temperature sensor 2 respectively, and the temperature sensor 2 determines a temperature of the measured object 6 through a temperature of the heat conduction medium 4, as shown in FIGS. 1 to 4.

The temperature of the measured object 6 may be indirectly conducted to the temperature sensor 2 through the heat conduction medium 4. The conductive temperature measurement structure for a charging apparatus not only monitors the temperature of the measured object 6, but also avoids a destructive influence on the temperature sensor 2, and thus both the service life and the measurement accuracy of the temperature sensor 2 are improved.

In this embodiment, the pressure supply mechanism is a movable mechanism that is capable of driving the heat conduction medium 4 to contact or separate from the measured object 6.

In this embodiment, a thermal impedance value of the heat conduction medium 4 is less than 12K•cm²/W.

The thermal impedance value refers to a ratio of a temperature difference per unit area of two ends of the object to the power of a heat source when there is heat transferred on the object. It can be understood as the resistance that the heat encounters on the heat flow path, which reflects the magnitude of the heat transfer capacity of the heat conduction medium 4 and indicates the magnitude of the temperature rise caused by 1W of heat. A simple analogy may be used to explain the meaning of thermal impedance, that is, the amount of heat exchanged is equivalent to current, the temperature difference is equivalent to voltage, and the thermal impedance is equivalent to resistance.

The smaller the thermal impedance value of the heat conduction medium 4 is, the better the heat conduction capacity of the heat conduction medium 4 is, so that heat can be well transferred and the temperature difference between the two ends of the heat conduction medium 4 can be reduced, and thus the detection accuracy rate of the temperature sensor 2 is improved.

After a plurality of times of experiments by the inventor, it is known that a temperature difference of 12°C is generated by 1W of heat in 1 square centimeter, when the thermal impedance value of the heat conduction medium 4 is greater than 12K·cm²/W. The greater the temperature difference is, the greater the temperature error is. For a temperature control system, it is difficult to determine the actual temperature of the measured object 6, and thus effective temperature control measures cannot be taken, which may result in a failure in the temperature control of the measured object 6, causing the temperature of the measured object 6 to be too high, thereby resulting in damage or even accidents. Therefore, the inventor sets the thermal impedance value of the heat conduction medium 4 to be less than 12K•cm²/W.

In order to verify the influence of the thermal impedance value of the heat conduction medium 4 on the temperature drift of the heat conduction medium 4, the inventor selects materials with the same size but different thermal impedance values to produce heat conduction medium 4, and uses the same pressure supply mechanism to cause the heat conduction medium 4 to contact the measured object 6. The measured objects 6 are set at the same temperature, and a temperature sensor 2 is then used to measure the temperature drifts at the other end of the heat conduction medium 4, which are recorded in Table 1.

The temperature drift value of the heat conduction medium 4 refers to a temperature difference value between the measured object 6 and the other end of the heat conduction medium 4. A temperature drift value greater than 10K is considered unqualified.

**Table 1 The influence of different thermal impedance values of the heat conduction medium 4 on the temperature drift of the heat conduction medium 4.**

| The thermal impedance value of the heat conduction medium 4 (K•cm²/W) | | | | | | | | | | | | | |
|---|---|---|---|---|---|---|---|---|---|---|---|---|---|
| 1 | 2 | 3 | 4 | 5 | 6 | 7 | 8 | 9 | 10 | 11 | 12 | 13 | 14 |

| The temperature drift value of the heat conduction medium 4 (K) | | | | | | | | | | | | | |
|---|---|---|---|---|---|---|---|---|---|---|---|---|---|
| 0.3 | 0.9 | 1.7 | 2.8 | 3.6 | 4.5 | 5.7 | 6.6 | 7.6 | 8.3 | 9.0 | 9.7 | 10.7 | 11.8 |

As can be seen from the above table, when the thermal impedance value of the heat conduction medium 4 is less than 12K·cm²/W, the temperature drift value is less than 10K, and the temperature of the heat conduction medium 4 measured by the temperature sensor 2 is relatively accurate. When the thermal impedance value of the heat conduction medium 4 is greater than 12K·cm²/W, the temperature drift value is more than 10K; and in this case, the temperature of the heat conduction medium 4 measured by the temperature sensor 2 has a large error, which may cause reflection distortion of the measurement system, thereby resulting in an inability to accurately control the temperature of the measured object 6.

In this embodiment, a heat conduction time of the heat conduction medium 4 is less than 20ms. The heat conduction time refers to the time it takes for heat to be transferred from one end to the other end of the heat conduction medium 4. The smaller the heat conduction time is, the higher the heat transfer speed of the heat conduction medium 4 is, so that the temperature of the measured object 6 may be rapidly reflected on the temperature sensor 2, and therefore a smaller response time for temperature control is realized.

After a plurality of times of experiments by the inventor, it is known that if the heat conduction time of the heat conduction medium 4 is greater than 20ms, when the temperature sensor 2 acquires the temperature of the heat conduction medium 4, in fact the temperature of the measured object 6 has already reached or exceeded the actual temperature value to be controlled. The temperature sensor 2 transmits a signal to the temperature control system, and it also takes time for the temperature control system to issue an instruction after making a judgment and adjust the temperature control device to make a temperature change. When the temperature adjustment measure of the temperature control device reaches the measured object 6, the real-time temperature of the measured object 6 is no longer the temperature obtained by the temperature sensor 2. This status will recur all the time, and it is never possible to achieve a stable thermal equilibrium, and consequently, it is not possible to reach a status of controlling the measured object 6 to maintain a stable temperature in real time. Therefore, the inventor sets the heat conduction time of the heat conduction medium 4 to be less than 20ms.

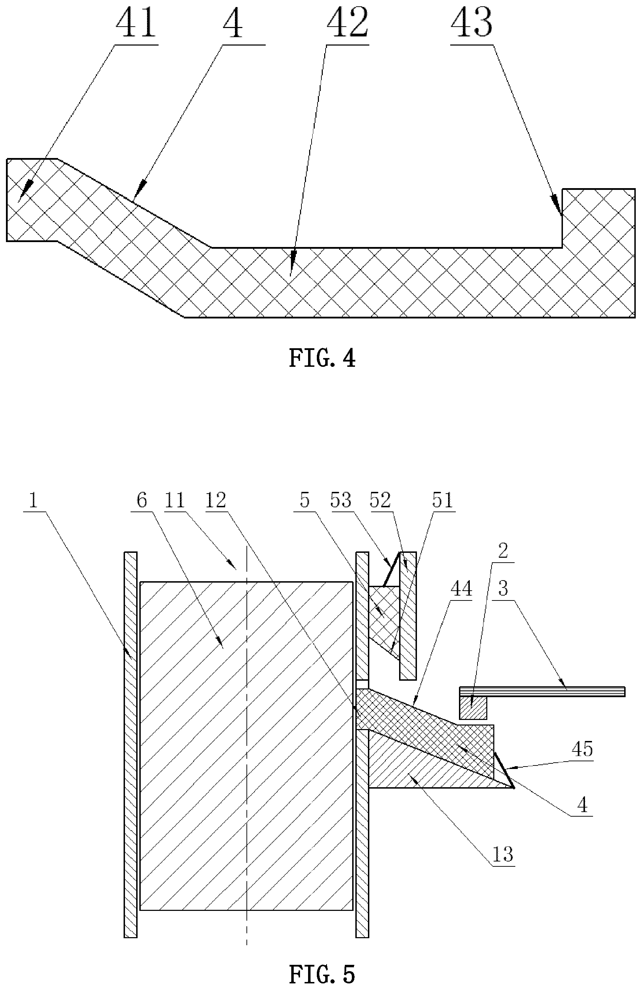

In this embodiment, the heat conduction medium 4 includes a contact part 41, a connection part 42 and a sensor contact part 43, all of which are arranged in sequence. The connection part 42 is in a rectangle, as shown in FIG. 4, and the connection part 42 may also be in a shape of one or more selected from a trapezoid, a parallelogram, a triangle, a V-shape, an A-shape, a U-shape or an L-shape. By setting the connection part 42 in various shapes, it is possible to adapt to the mounting conditions of various temperature measurement structures. The designer may set the mounting position of the heat conduction medium 4 based on the actual size, shape and motion mechanism of the temperature measurement structure, and select a corresponding shape of the connection part 42 based on the mounting position.

In this embodiment, the temperature sensor 2 is an NTC (Negative Temperature Coefficient) temperature sensor or a PTC (Positive Temperature Coefficient) temperature sensor. The temperature sensor 2 is an NTC temperature sensor or a PTC temperature sensor. The advantage of using these two kinds of temperature sensors is that they are small in volume and can measure a void that cannot be measured by other thermometers; they are easy to use, and have a resistance value that can be randomly selected from 0.1Ω to 100kΩ; they are easy to process into complex shapes and can be mass-produced, have high stability and strong overload capacity, and are suitable for use in products that have requirements for small volumes and stable performance, such as conversion adapter.

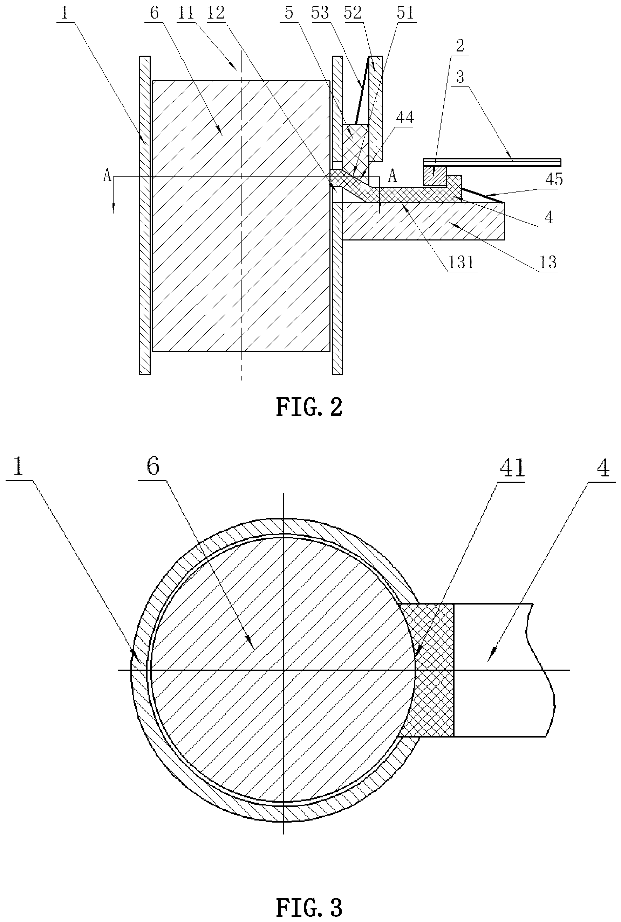

In this embodiment, when the contact part 41 is in contact with the measured object 6 and the sensor contact part 43 is in contact with the temperature sensor 2, the heat conduction medium 4 is in a working position, as shown in FIG. 2. At this time, the heat conduction medium 4 contacts the measured object 6, and is capable of conducting heat of the measured object 6 to the temperature sensor 2 in real time to achieve the purpose of measuring the temperature of the measured object 6 in real time. When the contact part 41 is separated from the measured object 6 and the sensor contact part 43 is separated from the temperature sensor 2, the heat conduction medium 4 is in an initial position, as shown in FIG. 1. When the measured object 6 is not in operation, the measured object 6 may be in a state of assembling, plugging or unplugging, maintenance, etc. At this time, the measured object 6 needs to have space for movement or even be disassembled. If the heat conduction medium 4 and the measured object 6 are fixedly installed, the space for movement for the measured object 6 will be restricted, and disassembly will be difficult. Therefore, when the measured object 6 is not in operation, the contact part 41 is separated from the measured object 6.

For example, when a charging gun and a charging socket in a charging apparatus are plugged into each other, the measured object 6 is the charging terminal. The charging terminal needs a certain amount of movement to plug the male and female terminals into each other, so as to prevent the "failure contagion" problem between different charging apparatus; and at this time, the heat conduction medium 4 will be separated from the measured object 6, i.e. the charging terminal, and return to the initial position.

In this embodiment, the contact part 41 is capable of being matched and in contact with the measured object 6, as shown in FIG. 3. The larger the contact area between the contact part 41 and the measured object 6 is, the more the heat of the measured object 6 is conducted. Also, the closer the contact part 41 is attached to the measured object 6, the less the heat is lost in the air between them, and thus the temperature of the measured object 6 measured by the temperature sensor 2 is more accurate. Therefore, not only the shapes of the contact part 41 and the measured object 6 should be consistent on the contact surfaces, but also the surface roughness of them should be as small as possible, so that the contact part 41 and the measured object 6 is capable of being closely attached together. If necessary, heat conductive materials such as silicone grease may be applied to the contact surfaces between the contact part 41 and the measured object 6.

In this embodiment, the contact area between the contact part 41 and the measured object 6 accounts for 0.1% to 95% of a radial projected area of the measured object 6.

In some embodiments, the measured object 6 is a combined substance of a plurality of structures, such as a charging terminal in a charging apparatus, which includes a crimping part of crimping conductive wires, a plug-in part for mating with a plug-in terminal, a fixing part for mounting to the charging apparatus, etc. The contact part 41 cannot completely contact the whole projected area of the charging terminal. Since the charging terminal is made of a copper material and has a high heat conduction speed, the temperature value at a certain position on it can represent the temperature of the entire charging terminal. Thus, the contact area between the contact part 41 and the measured object 6 may account for a minimum of 0.1% of the radial projected area of the measured object 6. As mentioned above, the larger the contact area between the contact part 41 and the measured object 6 is, the more the heat of the measured object 6 is conducted. If the contact area is less than 0.1%, the contact area between the contact part 41 and the measured object 6 is too small that the temperature value of a surface of the measured object 6 cannot be accurately reflected, resulting in an inaccuracy in temperature measurement.

Exemplarily, the contact area between the contact part 41 and the measured object 6 accounts for 1% to 45% of the radial projection area of the measured object 6.

In some other embodiments, the measured object 6 is an object with a relatively simpler structure and does not have a high heat-conducting property, so the contact part 41 must cover most of the surface area of it to achieve accurate measurement of the surface temperature of the measured object 6. Therefore, the contact area between the contact portion 41 and the measured object 6 may account for a maximum of 95% of the radial projected area of the measured object 6. If it is greater than 95%, the volume of the entire heat conduction medium 4 is too large, and consequently, the volume of the temperature measurement structure is too large, which would not only inconvenient to use but also cause an increase in cost and a decrease in efficiency of the temperature measurement structure. Moreover, the pressure supply mechanism would also be larger, thus causing operation difficulties.

In order to verify the influence of the proportion of the contact area between the contact part 41 and the measured object 6 to the radial projected area of the measured object 6 on the temperature drift of the heat conduction medium 4, the inventor selects measured objects 6 with the same size, and produces heat conduction medium 4 with different contact areas between the contact part 41 and the measured object 6, and uses the same pressure supply mechanism to cause the heat conduction medium 4 to contact the measured objects 6. The measured objects 6 are set at the same temperature, and a temperature sensor 2 is then used to measure the temperature drifts at the other end of the heat conduction medium 4, which are recorded in Table 2.

The temperature drift value of the heat conduction medium 4 refers to a temperature difference value between the measured object 6 and the other end of the heat conduction medium 4. A temperature drift value greater than 10K is considered unqualified.

**Table 2 The influence of the proportion of the contact area between the contact part and the measured object to the radial projected area of the measured object on the temperature drift of the heat conduction medium**

| The proportion of the contact area between the contact part and the measured object to the radial projected area of the measured object (%) | | | | | | | | | | | | | |
|---|---|---|---|---|---|---|---|---|---|---|---|---|---|
| 0.01 | 0.05 | 0.1 | 0.5 | 1 | 5 | 10 | 20 | 45 | 60 | 80 | 90 | 95 | 100 |

| The temperature drift value of the heat conduction medium 4 (K) | | | | | | | | | | | | | |
|---|---|---|---|---|---|---|---|---|---|---|---|---|---|
| 13.5 | 11.6 | 9.7 | 7.5 | 5.3 | 4.6 | 4.2 | 3.4 | 3.9 | 6.1 | 6.8 | 9.7 | 9.8 | 11.8 |

As can be seen from Table 2, when the contact area between the contact part 41 and the measured object 6 is less than 0.1% of the radial projected area of the measured object 6, the temperature drift value is over 10K, or, when the contact area between the contact part 41 and the measured object 6 is more than 95% of the radial projected area of the measured object 6, the temperature drift value is also over 10K. At this time, the temperature of the heat conduction medium 4 measured by the temperature sensor 2 has a large error, which will cause reflection distortion of the measurement system, resulting in a situation that the temperature of the measured object 6 cannot be accurately controlled. Therefore, the inventor sets the contact area between the contact part 41 and the measured object 6 to be 0.1% to 95% of the radial projected area of the measured object 6. optionally, when the contact area between the contact part 41 and the measured object 6 accounts for 1% to 45% of the radial projected area of the object 6, the temperature drift value of the heat conduction medium 4 is in a relatively exemplary range. At this time, the temperature of the heat conduction medium 4 measured by the temperature sensor 2 has a small error, and the measurement system is capable of accurately reflecting the actual temperature of the measured object 6.

In this embodiment, when the heat conduction medium 4 is in the working position, the contact part 41 is capable of exerting pressure on the measured object 6, or the sensor contact part 43 is capable of exerting pressure on the temperature sensor 2, or, the contact part 41 is capable of exerting pressure on the measured object 6 and the sensor contact part 43 is capable of exerting pressure on the temperature sensor 2, as shown in FIG. 2.

As can be seen from above, the more fully the contact part 41 is in contact with the measured object 6, the better the heat conduction effect will be. Similarly, the more fully the sensor contact part 43 is in contact with the temperature sensor 2, the more accurate the measurement of the temperature sensor 2 will be. However, since there are always tiny recesses and bulges on object surfaces, even if in contact with very flat surfaces, only some of the bulges of them are in contact, while there are still small gaps between the contact surfaces where air exists. The air, however, has very poor heat conduction effect, which will directly affect the heat conduction efficiency, making it impossible to obtain the accurate temperature of the measured object 6 in real time. In order to fully contact the contact part 41 with the measured object 6, and the sensor contact part 43 with the temperature sensor 2, it is necessary to apply force on the contact surfaces to flatten the tiny bulges thereon, so that even tiny recesses can come into contact, thereby achieving the purpose of increasing the contact area and enhancing the heat conduction effect.

In this embodiment, the pressure exerted by the contact part 41 on the measured object 6 is 0.5N to 100N, and the pressure exerted by the sensor contact part 43 on the temperature sensor 2 is 0.5N to 100N.

In order to verify the influence of the pressure exerted by the contact part 41 on the measured object 6 on the heat conduction effect and the operation situation of the pressure supply mechanism, the inventor selects the same measured objects 6 and heat conduction medium 4, and employs different pressures exerted by the contact part 41 on the measured object 6, to test the temperature rise values detected by the temperature sensor 2 and the operation situations of the pressure supply mechanism. In this embodiment, a temperature rise value of greater than 12K is considered unqualified, and if the operation of the pressure supply mechanism gets stuck more than 2 times, it is considered unqualified.

The method to detect the temperature rise values is to apply the same amount of heat to the measured objects 6 to keep their temperatures the same, then read the temperatures detected by the temperature sensor 2 in contact with the heat conduction medium 4, and obtain the temperature rise values by calculating the differences between the read temperatures and an initial temperature, and record them in Table 1.

The method to detect the operation situations of the pressure supply mechanism is to continuously operate the pressure supply mechanism under different pressures exerted by the contact part 41 on the measured object 6, and observe the numbers of times that it gets stuck after 50 times of operations, and record them in Table 3.

**Table 3 The influence of different pressures exerted by the contact part on the measured object on the temperature rise value and the mechanism operation**

| The pressure exerted by the contact part 41 on the measured object 6 (N) | | | | | | | | | | | |
|---|---|---|---|---|---|---|---|---|---|---|---|
| 0.1 | 0.3 | 0.5 | 1 | 3 | 5 | 10 | 20 | 40 | 70 | 100 | 105 |

| The temperature rise value detected by the temperature sensor (K) | | | | | | | | | | | |
|---|---|---|---|---|---|---|---|---|---|---|---|
| 18.5 | 14.3 | 11.4 | 10.9 | 8.5 | 6.2 | 5.7 | 4.3 | 3.9 | 2.4 | 1.5 | 0.9 |

| The number of times that the operation of the pressure supply mechanism gets stuck (times) | | | | | | | | | | | |
|---|---|---|---|---|---|---|---|---|---|---|---|
| 0 | 0 | 0 | 0 | 0 | 0 | 0 | 0 | 0 | 0 | 1 | 3 |

As can be seen from the above table, when the pressure exerted by the contact part 41 on the measured object 6 is less than 0.5N, the temperature rise value detected by the temperature sensor 2 exceeds the required value and does not meet the standard requirement. When the pressure exerted by the contact part 41 on the measured object 6 is greater than 100N, the operation of the pressure supply mechanism gets stuck for more than 2 times, which does not meet the standard requirement either. Therefore, the inventor sets the pressure exerted by the contact part 41 on the measured object 6 to be 0.5N to 100N.

In order to verify the influence of the pressure exerted by the sensor contact part 43 on the temperature sensor 2 on the detection result of the temperature sensor 2 and the damage condition of the temperature sensor 2, the inventor selects the same heat conduction medium 4 and temperature sensors 2, and employs different pressures exerted by the sensor contact part 43 on the temperature sensor 2, to test the temperature rise values detected by the temperature sensor 2 and the damage conditions of the temperature sensor 2 under different pressure conditions. In this embodiment, a temperature rise value of greater than 12K is considered unqualified, and if the temperature sensor 2 is damaged, it is considered unqualified.

The method to detect the temperature rise values is to apply the same amount heat to the sensor contact parts 43 to keep their temperatures the same, then read the temperatures detected by the temperature sensors 2 in contact with the sensor contact parts 43, and obtain the temperature rise values by calculating the differences between the read temperatures and an initial temperature, and record them in Table 4.

The method to detect the damage condition of the temperature sensor 2 is to conduct 50 times of pressure exertion experiments under different pressures exerted by the sensor contact part 43 on the temperature sensor 2, and observe the damage condition of the temperature sensor 2.

**Table 4 The influence of different pressures exerted by the sensor contact part on the temperature sensor on the temperature rise value**

| The pressure exerted by the sensor contact part 43 on the temperature sensor 2 (N) | | | | | | | | | | | |
|---|---|---|---|---|---|---|---|---|---|---|---|
| 0.1 | 0.3 | 0.5 | 1 | 3 | 5 | 10 | 20 | 40 | 70 | 100 | 105 |

| The temperature rise value detected by the temperature sensor (K) | | | | | | | | | | | |
|---|---|---|---|---|---|---|---|---|---|---|---|
| 17.3 | 13.8 | 11.2 | 10.5 | 8.8 | 6.7 | 5.4 | 4.6 | 3.3 | 2.7 | 1.3 | 0.8 |

| The number of times that the temperature sensor is damaged (times) | | | | | | | | | | | |
|---|---|---|---|---|---|---|---|---|---|---|---|
| 0 | 0 | 0 | 0 | 0 | 0 | 0 | 0 | 0 | 0 | 0 | 2 |

As can be seen from the above table, when the pressure exerted by the sensor contact part 43 on the temperature sensor 2 is less than 0.5N, the temperature rise value detected by the temperature sensor 2 exceeds the required value and does not meet the standard requirement. When the pressure exerted by the sensor contact part 43 on the temperature sensor 2 is greater than 100N, the temperature sensor 2 is damaged more than 2 times, which does not meet the standard requirement either. Therefore, the inventor sets the pressure exerted by the sensor contact part 43 on the temperature sensor 2 to be 0.5N to 100N.

In this embodiment, the pressure supply mechanism includes a support side wall 1. The support side wall 1 is a cylinder structure. The measured object 6 is accommodated in an accommodating cavity 11 enclosed by the support side wall 1. An axis of the measured object 6 coincides with an axis of the support side wall 1. A mounting opening 12 is provided on the support side wall 1. When the heat conduction medium 4 is in the working position, the heat conduction medium 4 is fixed within the mounting opening 12, as shown in FIGS. 1 to 3.

In this embodiment, in order that the heat conduction medium 4 can be in stable contact with the measured object 6 and the temperature sensor 2, the pressure supply mechanism further includes a support table 13 provided on an outer side of the support side wall 1. An upper portion of the support table 13 includes an upper contact surface 131, and the heat conduction medium 4 is matched and in contact with the upper contact surface 131 that is below the heat conduction medium (4), as shown in FIGS. 1-2.

In this embodiment, the upper contact surface 131 is arranged to be parallel with or inclined with respect to an axis of the mounting opening 12, as shown in FIGS. 1 and 2. The connection part 42 is capable of sliding laterally along the upper contact surface 131 and driving the contact part 41 and the sensor contact part 43 to move to the working position or the initial position.

In this embodiment, the pressure supply mechanism further includes a guide rail 52 provided on an outer side of the support side wall 1 and a positioning member 5 provided on the guide rail 52, the positioning member 5 being movable up and down along an axis direction of the support side wall 1. The function of the guide rail 52 is to guide the positioning member 5 to move up and down, and the function of the positioning member 5 is to cause the heat conduction medium 4 to move or rotate to the working position and fix it there, as shown in FIGS. 1 to 2.

When the positioning member 5 is in an upper position, the heat conduction medium 4 is in the initial position. During downward movement of the positioning member 5, the positioning member 5 is capable of contacting the connection part 42 and driving the heat conduction medium 4 to move to the working position, as shown in FIGS. 1 and 2.

Exemplarily, the positioning member 5 includes a lower inclined surface 51, the connection part 42 includes an upper inclined surface 44, and during downward movement of the positioning member 5, the lower inclined surface 51 is capable of contacting the upper inclined surface 44 and driving the heat conduction medium 4 to move to the working position.

In order to realize separation of the heat conduction medium 4 from the measured object 6 and return of the heat conduction medium 4 to the initial position when temperature measurement is not needed, the pressure supply mechanism further includes a first return device 53, one end of the first return device 53 is fixed to the guide rail 52 while the other end of it is fixed to the positioning member 5, and the first return device 53 is capable of driving the positioning member 5 to return to the upper position.

In order to realize separation of the heat conduction medium 4 from the measured object 6 and return of the heat conduction medium 4 to the initial position when temperature measurement is not needed, the pressure supply mechanism further includes a second return device 45, one end of the second return device 45 is fixed to the support table 13 while the other end of it is fixed to the connection part 42, and the second return device 45 is capable of driving the heat conduction medium 4 to return to the initial position.

Exemplarily, the first return device 53 may be an existing spring or a rubber-based elastomer, and the second return device 45 may be an existing spring or a rubber-based elastomer.

In this embodiment, the temperature measurement structure also includes a PCBA 3 (Printed Circuit Board Assembly), on which the temperature sensor 2 is located. The temperature sensor 2 is fixed below the PCBA 3, the sensor contact part 43 protrudes from the connection part 42, and the temperature sensor 2 and the sensor contact part 43 are arranged from left to right.

In this embodiment, the whole heat conduction medium 4 may be made of existing non-conductor materials with good heat-conducting properties, and the heat conduction medium 4 is made of the same material. Alternatively, the heat conduction medium 4 is made of different materials, and at least the contact part 41 in the heat conduction medium 4 is made of a non-conductor heat conductive material.

A charging apparatus will be introduced below. The charging apparatus includes a measured object 6 and the temperature measurement structure described above. The charging apparatus is a charging plug or a charging socket.

When the charging apparatus is assembled for use, the pressure supply mechanism is capable of driving the heat conduction medium 4 to contact the measured object 6 and the temperature sensor 2.

For example, the charging apparatus is a charging plug. When the charging plug is assembled with a charging socket for use, the charging socket is capable of driving the positioning member 5 to move downward, so that the heat conduction medium 4 comes into contact with the measured object 6 of the charging apparatus and the temperature sensor 2 at the same time.

Alternatively, the charging apparatus is a charging socket. When the charging socket is assembled with a charging plug for use, the charging socket is capable of driving the positioning member 5 to move downward, so that the heat conduction medium 4 comes into contact with the measured object 6 of the charging apparatus and the temperature sensor 2 at the same time.

The present disclosure also provides a motor vehicle including the temperature measurement structure described above.

### Embodiment 2

This embodiment is a transformation of Embodiment 1. The main difference between this embodiment and Embodiment 1 includes:
the temperature sensor 2 and the sensor contact part 43 are arranged from top to bottom, and
the temperature sensor 2 is electrically connected with the PCBA 3 via a data line 7, as shown in FIG. 5.

All other technical features in this embodiment may be the same as those in Embodiment 1, and will not be described in detail in this embodiment to save space.

### Embodiment 3

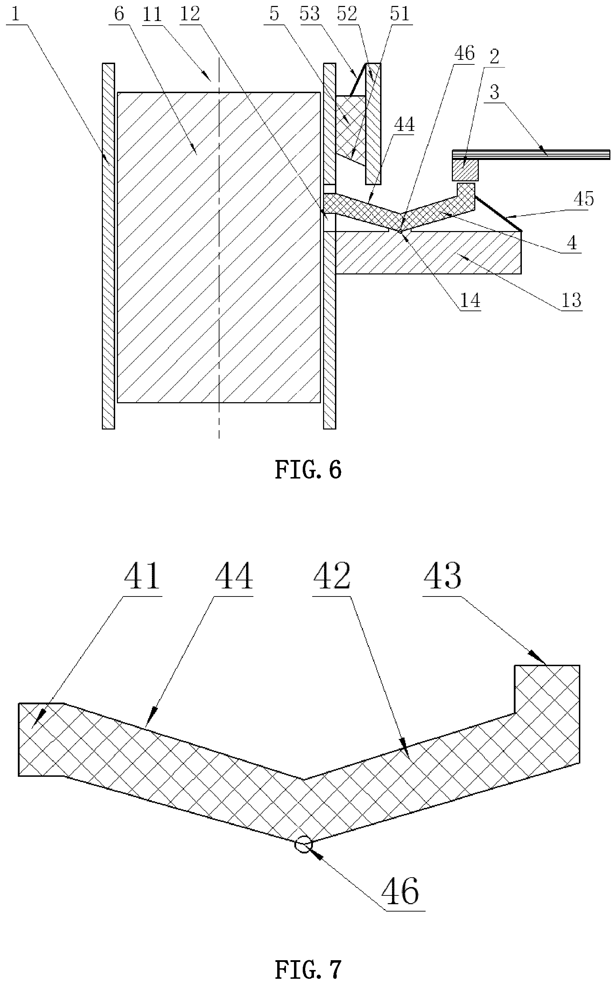

This embodiment is a transformation of Embodiment 1. The main difference between this embodiment and Embodiment 1 includes:
the connection part 42 is shown as a V-shaped structure, an articulated part 46 is provided on the connection part 42, and an articulated hole 14 is provided on the upper contact surface 131 in a direction parallel to the upper contact surface 131. The axis of the articulated hole 14 is perpendicular to both the axis of the mounting opening 12 and the axis of the accommodating cavity 11, and the axis of the articulated hole 14 is arranged in a front-rear direction. The articulated part 16 is articulated with the articulated hole 14, and the connection part 42 is capable of driving the contact part 41 and the sensor contact part 43 to rotate to the working position or the initial position, as shown in FIGS. 6 and 7, that is, the connection part 42 is capable of rotating clockwise or counter clockwise in FIG. 6.

All other technical features in this embodiment may be the same as those in Embodiment 1, and will not be described in detail in this embodiment to save space.

### Embodiment 4

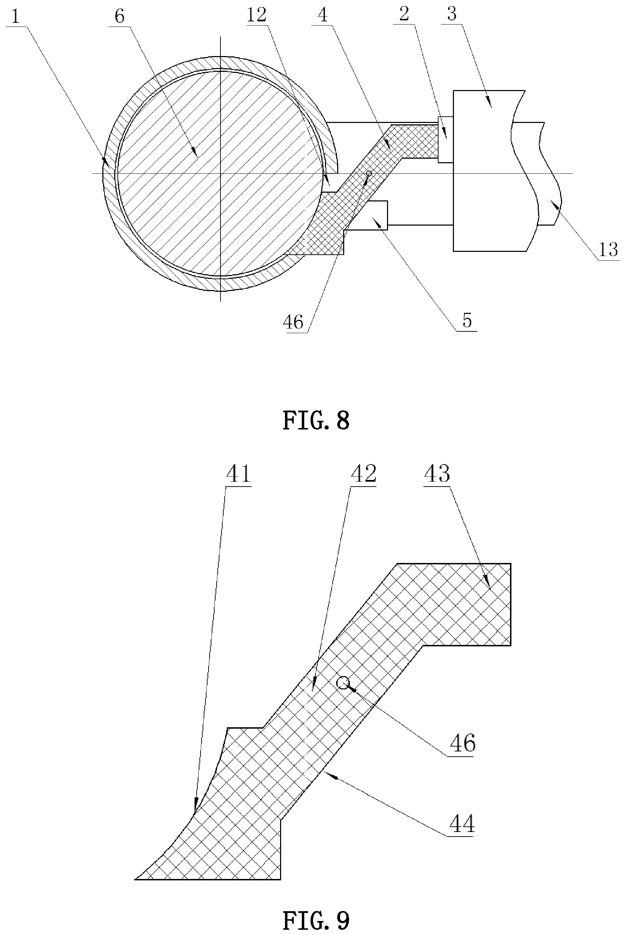

This embodiment is a transformation of Embodiment 3. The main difference between this embodiment and Embodiment 3 includes:
the heat conduction medium 4 is shown as a bending structure in top view, an articulated part 46 is provided on the connection part 42, and an articulated hole 14 is provided on the upper contact surface 131 in a direction perpendicular to the upper contact surface 131, an axis of the articulated hole 14 is parallel to the axis of the accommodating cavity 11, the axis of the articulated hole 14 is arranged in an up-down direction, the articulated part 46 is articulated with the articulated hole 14, and the connection part 42 is capable of driving the contact part 41 and the sensor contact part 43 to rotate to the working position or the initial position, as shown in FIGS. 8 and 9, that is, the connection part 42 is capable of rotating clockwise or counter clockwise in FIG. 8.

All other technical features in this embodiment may be the same as those in Embodiment 3, and will not be described in detail in this embodiment to save space.

### Embodiment 5

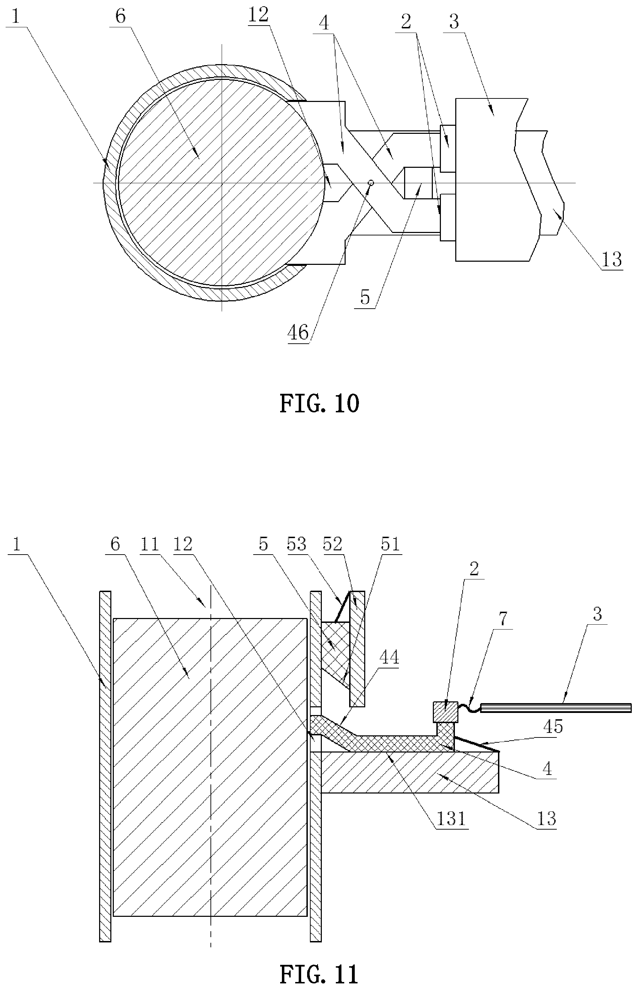

This embodiment is a transformation of Embodiment 4. The main difference between this embodiment and Embodiment 3 includes:
the number of heat conduction medium 4 is two, the two heat conduction mediums 4 are overlapped and crossed from top to bottom and shown as an X-shape in top view, the two heat conduction mediums 4 are capable of rotating simultaneously in opposite directions around the articulated hole 14 (with the axis of the articulated hole 14 as an axis), so as to drive two contact parts 41 and two sensor contact parts 43 to rotate to the working position or the initial position, as shown in FIG. 10.

For example, the upper (outer side in FIG. 10) heat conduction medium 4 is capable of rotating counter clockwise to the working position, and the lower (inner side in FIG. 10) heat conduction medium 4 is capable of rotating clockwise to the working position; the upper heat conduction medium 4 is capable of rotating clockwise to the initial position, and the lower heat conduction medium 4 is capable of rotating counter clockwise to the working position.

All other technical features in this embodiment may be the same as those in Embodiment 4, and will not be described in detail in this embodiment to save space.

### Embodiment 6 which does not form part of the claimed invention

This embodiment is a transformation of Embodiment 1. The main difference between this embodiment and Embodiment 1 includes:
the heat conduction medium 4 is always in contact with one selected from the measured object 6 and the temperature sensor 2, that is, the pressure supply mechanism is capable of driving the heat conduction medium 4 to contact the measured object 6 and the temperature sensor 2 of the charging apparatus at the same time (at this time, the temperature sensor 2 is capable of measuring the temperature of the heat conduction medium 4), the pressure supply mechanism is also capable of driving the heat conduction medium 4 to separate from one selected from the measured object 6 and the temperature sensor 2, that is, the pressure supply mechanism is capable of driving the heat conduction medium 4 to separate from the measured object 6, as shown in FIG. 11.

In order to facilitate replacement of the measured object 6, optionally the heat conduction medium 4 may be always in contact with the temperature sensor 2, that is, the heat conduction medium 4 and the temperature sensor 2 are always fixedly connected. The temperature sensor 2 and the sensor contact part 43 of the heat conduction medium 4 may be connected by one or more selected from adhesion connection, magnetic connection, snap connection, plug-in connection, locking connection, strapping connection, threaded connection, rivet connection and welding connection.

In a first feasible technical solution, contact surfaces of the heat conduction medium 4 and the temperature sensor 2 are adhesive layers, which are sticky materials made of a heat conductive material. The heat conduction medium 4 and the temperature sensor 2 are bonded together by the adhesive layer.

In a second feasible technical solution, the contact surfaces of the heat conduction medium 4 and the temperature sensor 2 are magnetic pieces. The connection of the conduction medium 4 and the temperature sensor 2 is realized by the magnetic force between the magnetic pieces. The connection is convenient and quick, and is mainly applied to environments that do not require high bonding strength between the heat conduction medium 4 and the temperature sensor 2.

In a third feasible technical solution, one selected from the contact surfaces of the heat conduction medium 4 and the temperature sensor 2 is a clamping claw, while the other is a clamping slot. Through the assembly of the clamping claw and the clamping slot, the contact surfaces of the heat conduction medium 4 and the temperature sensor 2 are stably connected together.

In a fourth feasible technical solution, one selected from the contact surfaces of the heat conduction medium 4 and the temperature sensor 2 is provided with a locking hook, while the other is provided with a latch. Through the assembly of the locking hook and the latch, the contact surfaces of the heat conduction medium 4 and the temperature sensor 2 are stably connected together.

In a fifth feasible technical solution, the heat conduction medium 4 and the temperature sensor 2 are provided with a groove. After the contact surfaces of the heat conduction medium 4 and the temperature sensor 2 are connected, a strapping member is used to strap the heat conduction medium 4 and the temperature sensor 2 together at the groove position. The strapping member includes a strapping belt, a pipe collar, a hook lock, etc.

In a sixth feasible technical solution, the heat conduction medium 4 and the temperature sensor 2 are provided with a thread and a screw, respectively. Through the threaded connection between the thread and the screw, the contact surfaces of the heat conduction medium 4 and the temperature sensor 2 are stably connected together. The minimum structure of the threaded connection is M3 thread and screw, and the minimum torque is 0.2Nm when the threaded connection structure is tightened.

In a seventh feasible technical solution, the heat conduction medium 4 and the temperature sensor 2 are respectively provided with a connection hole. A rivet passes through the connection holes, and the end of the rivet that passes through the connection holes is deformed to tighten the connecting holes, so that the heat conduction medium 4 and the temperature sensor 2 are stably connected together.

In an eighth feasible technical solution, in addition to the contact surfaces, the heat conduction medium 4 and the temperature sensor 2 respectively also have a welding surface. By melting and connecting the welding surfaces together using a welding machine, the heat conduction medium 4 and the temperature sensor 2 are stably connected together. The welding machine includes a hot melt welding machine and an ultrasonic welding machine.

In order to facilitate understanding and description, the present disclosure uses absolute positional relationships for expression. Unless otherwise specified, the directional word "upper" represents the upper side direction in FIG. 1, the directional word "lower" represents the lower side direction in FIG. 1, the directional word "left" represents the left side direction in FIG. 1, the directional word "right" represents the right side direction in FIG. 1, the directional word "front" represents the direction perpendicular to the paper plane in FIG. 1 and pointing to the inner side of the paper plane, and the directional word "rear" represents the direction perpendicular to the paper plane in FIG. 1 and pointing to the outer side of the paper plane. The present disclosure is described from a reader's perspective, but the above directional words cannot be understood or interpreted as limitations on the scope of the present disclosure.

## Claims

1. A temperature measurement structure, comprising a heat conduction medium (4), a temperature sensor (2) and a pressure supply mechanism, wherein the heat conduction medium (4) is mounted on the pressure supply mechanism, the pressure supply mechanism supplies pressure to make the heat conduction medium (4) in contact with a measured object (6) and the temperature sensor (2) respectively, and the temperature sensor (2) determines a temperature of the measured object (6) through a temperature of the heat conduction medium (4), wherein the heat conduction medium (4) comprises a contact part (41), a connection part (42) and a sensor contact part (43), all of which are arranged in sequence, when the contact part (41) is in contact with the measured object (6) and the sensor contact part (43) is in contact with the temperature sensor (2), the heat conduction medium (4) is in a working position;
**characterized in that** when the contact part (41) is separated from the measured object (6) and the sensor contact part (43) is separated from the temperature sensor (2), the heat conduction medium (4) is in an initial position, and when the heat conduction medium (4) is in the working position, the contact part (41) is capable of exerting pressure on the measured object (6), and the sensor contact part (43) is capable of exerting pressure on the temperature sensor (2).

2. The temperature measurement structure according to claim 1, wherein the pressure supply mechanism is a movable mechanism that is capable of driving the heat conduction medium (4) to contact or separate from the measured object (6);
or
wherein the temperature sensor (2) is an NTC temperature sensor or a PTC temperature sensor;
or
wherein a thermal impedance value of the heat conduction medium (4) is less than 12K•cm²/W;
or
wherein a heat conduction time of the heat conduction medium (4) is less than 20ms;
or
wherein the pressure supply mechanism comprises a support side wall (1), the measured object (6) is accommodated in an accommodating cavity (11) enclosed by the support side wall (1), a mounting opening (12) is provided on the support side wall (1), and the heat conduction medium (4) is fixed within the mounting opening (12).

3. The temperature measurement structure according to claim 1, wherein
the pressure exerted by the contact part (41) on the measured object (6) is 0.5N to 100N, and the pressure exerted by the sensor contact part (43) on the temperature sensor (2) is 0.5N to 100N.

4. The temperature measurement structure according to claim 1, wherein a contact area between the contact part (41) and the measured object (6) accounts for 0.1% to 95% of a radial projected area of the measured object (6);
preferably wherein
the contact area between the contact part (41) and the measured object (6) accounts for 1% to 45% of the radial projected area of the measured object (6).

5. The temperature measurement structure according to claim 1, wherein the pressure supply mechanism comprises a support side wall (1), the measured object (6) is accommodated in an accommodating cavity (11) enclosed by the support side wall (1), a mounting opening (12) is provided on the support side wall (1), and the heat conduction medium (4) is fixed within the mounting opening (12); wherein the heat conduction medium (4) comprises a contact part (41), a connection part (42) and a sensor contact part (43), all of which are arranged in sequence;
the pressure supply mechanism further comprises a support table (13) provided on an outer side of the support side wall (1), an upper portion of the support table (13) comprises an upper contact surface (131), and the heat conduction medium (4) is matched and connected with the upper contact surface (131) that is below the heat conduction medium (4).

6. The temperature measurement structure according to claim 5, wherein the upper contact surface (131) is provided to be parallel with or inclined with respect to an axis of the mounting opening (12);
or
wherein the connection part (42) is capable of sliding along the upper contact surface (131) and driving the contact part (41) and the sensor contact part (43) to move;
or
wherein an articulated part (46) is provided on the connection part (42), an articulated hole (14) is provided on the upper contact surface (131) in a direction parallel to the upper contact surface (131), the articulated part (46) is articulated with the articulated hole (14), and the connection part (42) is capable of driving the contact part (41) and the sensor contact part (43) to rotate;
or
wherein an articulated part (46) is provided on the connection part (42), an articulated hole (14) is provided on the upper contact surface (131) in a direction perpendicular to the upper contact surface (131), the articulated part (46) is articulated with the articulated hole (14), and the connection part (42) is capable of driving the contact part (41) and the sensor contact part (43) to rotate.

7. The temperature measurement structure according to claim 5, wherein an articulated part (46) is provided on the connection part (42), an articulated hole (14) is provided on the upper contact surface (131) in a direction parallel to the upper contact surface (131), the articulated part (46) is articulated with the articulated hole (14), and the connection part (42) is capable of driving the contact part (41) and the sensor contact part (43) to rotate;
wherein the number of the heat conduction medium (4) is two, the two heat conduction mediums (4) is capable of rotating around the articulated hole (14) in opposite directions respectively and driving the two contact parts (41) and the two sensor contact parts (43) to rotate.

8. The temperature measurement structure according to claim 5, wherein the pressure supply mechanism further comprises a guide rail (52) provided on an outer side of the support side wall (1) and a positioning member (5) provided on the guide rail (52), the positioning member (5) being movable up and down along an axis direction of the support side wall (1).

9. The temperature measurement structure according to claim 8, wherein during downward movement of the positioning member (5), the positioning member (5) is capable of contacting the connection part (42) and driving the heat conduction medium (4) to move or rotate to a working position;
or
wherein the positioning part (5) comprises a lower inclined surface (51), the connection part (42) comprises an upper inclined surface (44), and during downward movement of the positioning member (5), the lower inclined surface (51) is capable of contacting the upper inclined surface (44) and driving the heat conduction medium (4) to move or rotate to a working position.

10. The temperature measurement structure according to claim 8, wherein the pressure supply mechanism further comprises a first return device (53), one end of the first return device (53) is fixed to the guide rail (52) while the other end of it is fixed to the positioning member (5), and the first return device (53) is capable of driving the positioning member (5) to return to an upper position;
preferably wherein
the first return device (53) is a spring or a rubber-based elastomer.

11. The temperature measurement structure according to claim 5, wherein the pressure supply mechanism further comprises a second return device (45), one end of the second return device (45) is fixed to the support table (13) while the other end of it is fixed to the connection part (42), and the second return device (45) is capable of driving the heat conduction medium (4) to return to an initial position;
preferably wherein
the second return device (45) is a spring or a rubber-based elastomer.

12. The temperature measurement structure according to claim 1, wherein the temperature measurement structure further comprises a PCBA (3), and the temperature sensor (2) is connected with the PCBA (3);
preferably wherein
the heat conduction medium (4) comprises a contact part (41), a connection part (42) and a sensor contact part (43), all of which are arranged in sequence, the temperature sensor (2) and the sensor contact part (43) are arranged from top to bottom, and the temperature sensor (2) is electrically connected with the PCBA (3) via a data line (7);
preferably wherein
the temperature sensor (2) and the sensor contact part (43) are connected by one or more selected from adhesion connection, magnetic connection, snap connection, plug-in connection, locking connection, bundling connection, threaded connection, rivet connection and welding connection.

13. A charging apparatus, wherein the charging apparatus comprises a measured object (6) and a temperature measurement structure according to any one of claims 1 to 12, and the charging apparatus is a charging plug or a charging socket;
preferably wherein
when the charging apparatus is assembled, the pressure supply mechanism is capable of driving the heat conduction medium (4) to contact the measured object (6) and the temperature sensor (2).

14. A motor vehicle, wherein the motor vehicle comprises a temperature measurement structure according to any one of claims 1 to 12.

## Patentansprüche

1. Temperaturmessstruktur, umfassend ein Wärmeleitmedium (4), einen Temperatursensor (2) und einen Druckbeaufschlagungsmechanismus, wobei das Wärmeleitmedium (4) auf dem Druckbeaufschlagungsmechanismus angebracht ist, der Druckbeaufschlagungsmechanismus Druck beaufschlagt, um das Wärmeleitmedium (4) in Kontakt mit einem Messobjekt (6) und dem Temperatursensor (2) zu bringen, und der Temperatursensor (2) eine Temperatur des Messobjekts (6) anhand einer Temperatur des Wärmeleitmediums (4) bestimmt, wobei das Wärmeleitmedium (4) einen Kontaktteil (41), einen Verbindungsteil (42) und einen Sensorkontaktteil (43) umfasst, die nacheinander angeordnet sind, wobei sich das Wärmeleitmedium (4) in einer Arbeitsposition befindet, wenn der Kontaktteil (41) mit dem Messobjekt (6) in Kontakt steht und der Sensorkontaktteil (43) mit dem Temperatursensor (2) in Kontakt steht;
**dadurch gekennzeichnet, dass**, wenn der Kontaktteil (41) vom Messobjekt (6) getrennt ist und der Sensorkontaktteil (43) vom Temperatursensor (2) getrennt ist, sich das Wärmeleitmedium (4) in einer Ausgangsposition befindet, und wenn sich das Wärmeleitmedium (4) in der Arbeitsposition befindet, der Kontaktteil (41) in der Lage ist, Druck auf das Messobjekt (6) auszuüben, und der Sensorkontaktteil (43) in der Lage ist, Druck auf den Temperatursensor (2) auszuüben.

2. Temperaturmessstruktur nach Anspruch 1,
bei der der Druckbeaufschlagungsmechanismus ein beweglicher Mechanismus ist, der in der Lage ist, das Wärmeleitmedium (4) anzutreiben, um mit dem Messobjekt (6) in Kontakt zu kommen oder sich von diesem zu trennen; oder
bei der der Temperatursensor (2) ein NTC-Temperatursensor oder ein PTC-Temperatursensor ist; oder
bei der ein thermischer Impedanzwert des Wärmeleitmediums (4) weniger als 12 K*cm²/W beträgt; oder
bei der eine Wärmeleitzeit des Wärmeleitmediums (4) weniger als 20 ms beträgt; oder
bei der der Druckbeaufschlagungsmechanismus eine Stützseitenwand (1) umfasst, das Messobjekt (6) in einem von der Stützseitenwand (1) umschlossenen Aufnahmeraum (11) untergebracht ist, eine Befestigungsöffnung (12) an der Stützseitenwand (1) vorgesehen ist, und das Wärmeleitmedium (4) in der Befestigungsöffnung (12) befestigt ist.

3. Temperaturmessstruktur nach Anspruch 1, bei der der vom Kontaktteil (41) auf das Messobjekt (6) ausgeübte Druck 0,5 N bis 100 N beträgt und der vom Sensorkontaktteil (43) auf den Temperatursensor (2) ausgeübte Druck 0,5 N bis 100 N beträgt.

4. Temperaturmessstruktur nach Anspruch 1, bei der eine Kontaktfläche zwischen dem Kontaktteil (41) und dem Messobjekt (6) 0,1 % bis 95 % einer radialen Projektionsfläche des Messobjekts (6) ausmacht;
vorzugsweise bei der die Kontaktfläche zwischen dem Kontaktteil (41) und dem Messobjekt (6) 1 % bis 45 % der radialen Projektionsfläche des Messobjekts (6) ausmacht.

5. Temperaturmessstruktur nach Anspruch 1, bei der der Druckbeaufschlagungsmechanismus eine Stützseitenwand (1) umfasst, das Messobjekt (6) in einem von der Stützseitenwand (1) umschlossenen Aufnahmeraum (11) untergebracht ist, eine Befestigungsöffnung (12) an der Stützseitenwand (1) vorgesehen ist, und das Wärmeleitmedium (4) in der Befestigungsöffnung (12) befestigt ist; wobei das Wärmeleitmedium (4) einen Kontaktteil (41), einen Verbindungsteil (42) und einen Sensorkontaktteil (43) umfasst, die nacheinander angeordnet sind;
der Druckbeaufschlagungsmechanismus ferner einen Stütztisch (13) umfasst, der an einer Außenseite der Stützseitenwand (1) vorgesehen ist, wobei ein oberer Abschnitt des Stütztisches (13) eine obere Kontaktfläche (131) umfasst und das Wärmeleitmedium (4) an die obere Kontaktfläche (131) angepasst und mit dieser verbunden ist, die sich unterhalb des Wärmeleitmediums (4) befindet.

6. Temperaturmessstruktur nach Anspruch 5, bei der die obere Kontaktfläche (131) parallel zu einer Achse der Befestigungsöffnung (12) oder in Bezug auf diese geneigt vorgesehen ist; oder
bei der der Verbindungsteil (42) in der Lage ist, entlang der oberen Kontaktfläche (131) zu gleiten und den Kontaktteil (41) und den Sensorkontaktteil (43) zu einer Bewegung anzutreiben; oder
bei der ein Gelenkteil (46) an dem Verbindungsteil (42) vorgesehen ist, ein Gelenkloch (14) an der oberen Kontaktfläche (131) in einer zu der oberen Kontaktfläche (131) parallelen Richtung vorgesehen ist, den Gelenkteil (46) mit dem Gelenkloch (14) gelenkig verbunden ist, und das Verbindungsteil (42) in der Lage ist, den Kontaktteil (41) und den Sensorkontaktteil (43) zu einer Drehung anzutreiben; oder
bei der ein Gelenkteil (46) an dem Verbindungsteil (42) vorgesehen ist, ein Gelenkloch (14) an der oberen Kontaktfläche (131) in einer zur oberen Kontaktfläche (131) senkrechten Richtung vorgesehen ist, der Gelenkteil (46) mit dem Gelenkloch (14) gelenkig verbunden ist, und der Verbindungsteil (42) in der Lage ist, den Kontaktteil (41) und den Sensorkontaktteil (43) zu einer Drehung anzutreiben.

7. Temperaturmessstruktur nach Anspruch 5, bei der ein Gelenkteil (46) an dem Verbindungsteil (42) vorgesehen ist, ein Gelenkloch (14) an der oberen Kontaktfläche (131) in einer zu der oberen Kontaktfläche (131) parallelen Richtung vorgesehen ist, den Gelenkteil (46) mit dem Gelenkloch (14) gelenkig verbunden ist und der Verbindungsteil (42) in der Lage ist, den Kontaktteil (41) und den Sensorkontaktteil (43) zu einer Drehung anzutreiben;
wobei die Anzahl der Wärmeleitmedien (4) zwei beträgt und die beiden Wärmeleitmedien (4) in der Lage sind, sich jeweils in entgegengesetzten Richtungen um das Gelenkloch (14) zu drehen und die beiden Kontaktteile (41) und die beiden Sensorkontaktteile (43) zu einer Drehung anzutreiben.

8. Temperaturmessstruktur nach Anspruch 5, bei der der Druckbeaufschlagungsmechanismus ferner eine Führungsschiene (52), die an einer Außenseite der Stützseitenwand (1) vorgesehen ist, und ein Positionierungselement (5) umfasst, das an der Führungsschiene (52) vorgesehen ist, wobei das Positionierungselement (5) entlang einer Achsenrichtung der Stützseitenwand (1) auf und ab bewegbar ist.

9. Temperaturmessstruktur nach Anspruch 8,
bei der während der Abwärtsbewegung des Positionierungselements (5) das Positionierungselement (5) in der Lage ist, den Verbindungsteil (42) zu berühren und das Wärmeleitmedium (4) zu einer Bewegung oder Drehung in eine Arbeitsposition anzutreiben; oder
bei der das Positionierungselement (5) eine untere geneigte Fläche (51) umfasst, der Verbindungsteil (42) eine obere geneigte Fläche (44) umfasst und während der Abwärtsbewegung des Positionierungselements (5) die untere geneigte Fläche (51) in der Lage ist, mit der oberen geneigten Fläche (44) in Kontakt zu kommen und das Wärmeleitmedium (4) zu einer Bewegung oder Drehung in eine Arbeitsposition anzutreiben.

10. Temperaturmessvorrichtung nach Anspruch 8, bei der der Druckbeaufschlagungsmechanismus ferner eine erste Rückstellvorrichtung (53) umfasst, wobei ein Ende der ersten Rückstellvorrichtung (53) an der Führungsschiene (52) befestigt ist, während das andere Ende davon an dem Positionierungselement (5) befestigt ist, und die erste Rückstellvorrichtung (53) in der Lage ist, das Positionierungselement (5) zur Rückkehr in eine obere Position anzutreiben;
vorzugsweise wobei die erste Rückstellvorrichtung (53) eine Feder oder ein Elastomer auf Gummibasis ist.

11. Temperaturmessstruktur nach Anspruch 5, bei der der Druckbeaufschlagungsmechanismus ferner eine zweite Rückstellvorrichtung (45) umfasst, wobei ein Ende der zweiten Rückstellvorrichtung (45) an dem Auflagetisch (13) befestigt ist, während das andere Ende davon an dem Verbindungsteil (42) befestigt ist, und die zweite Rückstellvorrichtung (45) in der Lage ist, das Wärmeleitmedium (4) zur Rückkehr in eine Ausgangsposition anzutreiben;
vorzugsweise wobei die zweite Rückstellvorrichtung (45) eine Feder oder ein Elastomer auf Gummibasis ist.

12. Temperaturmessvorrichtung nach Anspruch 1, wobei die Temperaturmessvorrichtung ferner eine PCBA (3) umfasst und der Temperatursensor (2) mit der PCBA (3) verbunden ist;
vorzugsweise bei der das Wärmeleitmedium (4) einen Kontaktteil (41), einen Verbindungsteil (42) und einen Sensorkontaktteil (43) umfasst, die nacheinander angeordnet sind, wobei der Temperatursensor (2) und der Sensorkontaktteil (43) von oben nach unten angeordnet sind und der Temperatursensor (2) über eine Datenleitung (7) elektrisch mit der PCBA (3) verbunden ist;
vorzugsweise bei der der Temperatursensor (2) und der Sensorkontaktteil (43) durch eine oder mehrere Verbindungen verbunden sind, die aus einer Klebeverbindung, einer Magnetverbindung, einer Schnappverbindung, einer Steckverbindung, einer Verriegelungsverbindung, einer Bündelverbindung, einer Gewindeverbindung, einer Nietverbindung und einer Schweißverbindung ausgewählt sind.

13. Ladegerät, wobei das Ladegerät ein Messobjekt (6) und eine Temperaturmessstruktur nach einem der Ansprüche 1 bis 12 umfasst und das Ladegerät ein Ladestecker oder eine Ladebuchse ist;
vorzugsweise wobei, wenn das Ladegerät zusammengebaut ist, der Druckbeaufschlagungsmechanismus in der Lage ist, das Wärmeleitmedium (4) anzutreiben, um mit dem Messobjekt (6) und dem Temperatursensor (2) in Kontakt zu kommen.

14. Kraftfahrzeug, wobei das Kraftfahrzeug eine Temperaturmessstruktur gemäß einem der Ansprüche 1 bis 12 umfasst.

## Revendications

1. Structure de mesure de la température, comprenant un moyen de conduction de la chaleur (4), un capteur de température (2) et un mécanisme d'alimentation en pression, dans laquelle le moyen de conduction de la chaleur (4) est monté sur le mécanisme d'alimentation en pression, le mécanisme d'alimentation en pression fournit une pression afin que le moyen de conduction de la chaleur (4) soit en contact avec un objet mesuré (6) et le capteur de température (2) respectivement, et le capteur de température (2) détermine une température de l'objet mesuré (6) par le biais d'une température du moyen de conduction de la chaleur (4), dans laquelle le moyen de conduction de la chaleur (4) comprend une partie de contact (41), une partie de raccordement (42) et une partie de contact avec le capteur (43), qui sont toutes prévues successivement, et, lorsque la partie de contact (41) est en contact avec l'objet mesuré (6) et la partie de contact avec le capteur (43) est en contact avec le capteur de température (2), le moyen de conduction de la chaleur (4) se trouve dans une position de fonctionnement ;
**caractérisée en ce que**, lorsque la partie de contact (41) est séparée de l'objet mesuré (6) et la partie de contact avec le capteur (43) est séparée du capteur de température (2), le moyen de conduction de la chaleur (4) se trouve dans une position initiale, et, lorsque le moyen de conduction de la chaleur (4) se trouve dans la position de fonctionnement, la partie de contact (41) peut exercer une pression sur l'objet mesuré (6), et la partie de contact avec le capteur (43) peut exercer une pression sur le capteur de température (2).

2. Structure de mesure de la température selon la revendication 1, dans laquelle le mécanisme d'alimentation en pression est un mécanisme mobile qui peut entraîner le moyen de conduction de la chaleur (4) afin qu'il entre en contact avec ou qu'il se sépare de l'objet mesuré (6) ;
ou
dans laquelle le capteur de température (2) est un capteur de température NTC ou un capteur de température PTC ;
ou
dans laquelle une valeur d'impédance thermique du moyen de conduction de la chaleur (4) est inférieure à 12 K●cm²/W ;
ou
dans laquelle une durée de conduction de la chaleur du moyen de conduction de la chaleur (4) est inférieure à 20 ms ;
ou
dans laquelle le mécanisme d'alimentation en pression comprend une paroi latérale de support (1), l'objet mesuré (6) est contenu dans une cavité (11) encerclée par la paroi latérale de support (1), une ouverture de montage (12) est prévue sur la paroi latérale de support (1), et le moyen de conduction de la chaleur (4) est fixé dans l'ouverture de montage (12).

3. Structure de mesure de la température selon la revendication 1, dans laquelle
la pression exercée par la partie de contact (41) sur l'objet mesuré (6) est de 0,5 N à 100 N, et la pression exercée par la partie de contact avec le capteur (43) sur le capteur de température (2) est de 0,5 N à 100 N.

4. Structure de mesure de la température selon la revendication 1, dans laquelle une surface de contact entre la partie de contact (41) et l'objet mesuré (6) représente 0,1 % à 95 % d'une surface projetée radiale de l'objet mesuré (6) ;
dans laquelle, de préférence,
la surface de contact entre la partie de contact (41) et l'objet mesuré (6) représente 1 % à 45 % de la surface projetée radiale de l'objet mesuré (6).

5. Structure de mesure de la température selon la revendication 1, dans laquelle le mécanisme d'alimentation en pression comprend une paroi latérale de support (1), l'objet mesuré (6) est contenu dans une cavité (11) encerclée par la paroi latérale de support (1), une ouverture de montage (12) est prévue sur la paroi latérale de support (1), et le moyen de conduction de la chaleur (4) est fixé dans l'ouverture de montage (12) ; dans laquelle le moyen de conduction de la chaleur (4) comprend une partie de contact (41), une partie de raccordement (42) et une partie de contact avec le capteur (43), qui sont toutes prévues successivement ;
le mécanisme d'alimentation en pression comprend en outre une table de support (13) prévue sur un côté externe de la paroi latérale de support (1), une partie supérieure de la table de support (13) comprend une surface de contact supérieure (131), et le moyen de conduction de la chaleur (4) est aligné avec et raccordé à la surface de contact supérieure (131) qui se trouve sous le moyen de conduction de la chaleur (4).

6. Structure de mesure de la température selon la revendication 5, dans laquelle la surface de contact supérieure (131) est prévue pour être parallèle à ou inclinée par rapport à un axe de l'ouverture de montage (12) ;
ou
dans laquelle la partie de raccordement (42) peut coulisser le long de la surface de contact supérieure (131) et entraîner la partie de contact (41) et la partie de contact avec le capteur (43) de sorte qu'elles se déplacent ;
ou
dans laquelle une partie articulée (46) est prévue sur la partie de raccordement (42), un orifice articulé (14) est prévu sur la surface de contact supérieure (131) dans une direction parallèle à la surface de contact supérieure (131), la partie articulée (46) est articulée avec l'orifice articulé (14), et la partie de raccordement (42) peut entraîner la partie de contact (41) et la partie de contact avec le capteur (43) afin qu'elles tournent ;
ou
dans laquelle une partie articulée (46) est prévue sur la partie de raccordement (42), un orifice articulé (14) est prévu sur la surface de contact supérieure (131) dans une direction perpendiculaire à la surface de contact supérieure (131), la partie articulée (46) est articulée avec l'orifice articulé (14), et la partie de raccordement (42) peut entraîner la partie de contact (41) et la partie de contact avec le capteur (43) afin qu'elles tournent.

7. Structure de mesure de la température selon la revendication 5, dans laquelle une partie articulée (46) est prévue sur la partie de raccordement (42), un orifice articulé (14) est prévu sur la surface de contact supérieure (131) dans une direction parallèle à la surface de contact supérieure (131), la partie articulée (46) est articulée avec l'orifice articulé (14), et la partie de raccordement (42) peut entraîner la partie de contact (41) et la partie de contact avec le capteur (43) afin qu'elles tournent ;
dans laquelle le nombre de moyens de conduction de la chaleur (4) est de deux, les deux moyens de conduction de la chaleur (4) peuvent tourner autour de l'orifice articulé (14) dans des directions opposées respectivement et entraîner les deux parties de contact (41) et les deux parties de contact avec le capteur (43) afin qu'elles tournent.

8. Structure de mesure de la température selon la revendication 5, dans laquelle le mécanisme d'alimentation en pression comprend en outre un rail de guidage (52) prévu sur un côté externe de la paroi latérale de support (1) et un élément de positionnement (5) prévu sur le rail de guidage (52), l'élément de positionnement (5) étant mobile vers le haut et vers le bas le long d'une direction axiale de la paroi latérale de support (1).

9. Structure de mesure de la température selon la revendication 8, dans laquelle, pendant le déplacement vers le bas de l'élément de positionnement (5), l'élément de positionnement (5) peut entrer en contact avec la partie de raccordement (42) et entraîner le moyen de conduction de la chaleur (4) afin qu'il se déplace ou qu'il tourne vers une position de fonctionnement ;
ou
dans laquelle la partie de positionnement (5) comprend une surface inclinée inférieure (51), la partie de raccordement (42) comprend une surface inclinée supérieure (44), et, pendant le déplacement vers le bas de l'élément de positionnement (5), la surface inclinée inférieure (51) peut entrer en contact avec la surface inclinée supérieure (44) et entraîner le moyen de conduction de la chaleur (4) afin qu'il se déplace ou qu'il tourne vers une position de fonctionnement.

10. Structure de mesure de la température selon la revendication 8, dans laquelle le mécanisme d'alimentation en pression comprend en outre un premier dispositif de retour (53), une extrémité du premier dispositif de retour (53) est fixée sur le rail de guidage (52) tandis que l'autre extrémité de celui-ci est fixée sur l'élément de positionnement (5), et le premier dispositif de retour (53) peut entraîner l'élément de positionnement (5) afin qu'il revienne dans une position supérieure ;
dans laquelle, de préférence,
le premier dispositif de retour (53) est un ressort ou un élastomère à base de caoutchouc.

11. Structure de mesure de la température selon la revendication 5, dans laquelle le mécanisme d'alimentation en pression comprend en outre un deuxième dispositif de retour (45), une extrémité du deuxième dispositif de retour (45) est fixée sur la table de support (13) tandis que l'autre extrémité de celui-ci est fixée sur la partie de raccordement (42), et le deuxième dispositif de retour (45) peut entraîner le moyen de conduction de la chaleur (4) afin qu'il revienne dans une position initiale ;
dans laquelle, de préférence,
le deuxième dispositif de retour (45) est un ressort ou un élastomère à base de caoutchouc.

12. Structure de mesure de la température selon la revendication 1, dans laquelle la structure de mesure de la température comprend en outre une carte électronique (3), et le capteur de température (2) est relié à la carte électronique (3) ;
dans laquelle, de préférence,
le moyen de conduction de la chaleur (4) comprend une partie de contact (41), une partie de raccordement (42) et une partie de contact avec le capteur (43), qui sont toutes prévues successivement, le capteur de température (2) et la partie de contact avec le capteur (43) sont prévues de haut en bas, et le capteur de température (2) est relié électriquement à la carte électronique (3) via une ligne de données (7) ;
dans laquelle, de préférence,
le capteur de température (2) et la partie de contact avec le capteur (43) sont reliés par un ou plusieurs d'un raccordement par adhérence, d'un raccordement magnétique, d'un raccordement par accouplement, d'un raccordement par enfichage, d'un raccordement par verrouillage, d'un raccordement par formation de faisceaux, d'un raccordement par filetages, d'un raccordement par rivets et d'un raccordement par soudage.

13. Appareil de chargement, dans lequel l'appareil de chargement comprend un objet mesuré (6) et une structure de mesure de la température selon l'une quelconque des revendications 1 à 12, et l'appareil de chargement est une prise de chargement ou une fiche de chargement ;
dans lequel, de préférence,
lorsque l'appareil de chargement est assemblé, le mécanisme d'alimentation en pression peut entraîner le moyen de conduction de la chaleur (4) afin qu'il entre en contact avec l'objet mesuré (6) et le capteur de température (2).

14. Véhicule à moteur, dans lequel le véhicule à moteur comprend une structure de mesure de la température selon l'une quelconque des revendications 1 à 12.
